# EUROPEAN PATENT APPLICATION

(11) **EP 4 851 521 A1**
(43) Date of publication of application: **09.12.2026**
(21) Application number: 26172148.4
(22) Date of filing: 14.04.2026
(51) Int. Cl.: F16M 11/16, F15B 15/00, F16M 11/18, F16M 11/28, G03B 17/56

(54) **DRIVE CONTROL APPARATUS FOR MONOPOD, AND MONOPOD**

(30) Priority: 06.06.2025 CN 202521163588 U
(71) Applicant: Shenzhen Leqi Innovation Co., Ltd., Shenzhen, Guangdong (CN)
(72) Inventor: TANG, Shaorui, Shenzhen (CN); PAN, Zhiqiang, Shenzhen, (CN)
(74) Representative: Metida

(57) **Abstract**

A drive control apparatus (100) suitable for a monopod, comprising a handle base (10), internally provided with a cavity suitable for accommodating a fluid medium; a moving member (20), slidably mounted in the cavity, wherein an outer wall of the moving member (20) is sealed against an inner wall of the cavity, the moving member (20) divides the cavity into a first accommodating cavity (104) and a second accommodating cavity (105), and the moving member (20) is provided with a first through hole (201) for communication between the first accommodating cavity (104) and the second accommodating cavity (105); and a handle body (30), rotatably mounted on the handle base (10), wherein one end of the handle body (30) extending into the handle base (10) abuts against a bottom of the moving member (20), and the handle body (30) is configured to drive the moving member (20) to move in a direction from the second accommodating cavity (105) toward the first accommodating cavity (104), so as to press the fluid medium from the first accommodating cavity (104) into the second accommodating cavity (105); and wherein the handle base (10) is further provided with a second through hole (106) in communication with the second accommodating cavity (105).

## Description

### TECHNICAL FIELD

The present disclosure relates to the technical field of photography or videography equipment, and more specifically, to a drive control apparatus for a monopod and the monopod.

### BACKGROUND

With the progress of society and the continuous improvement of living conditions, people have shifted from the basic material needs of staying warm and well-fed to higher-level spiritual pursuits. Photography and videography have become a means for people to record bits and pieces of daily life or the scenery of nature during travel or leisure activities. As photography or videography equipment has become accessible to ordinary households, both amateur photographers and professional cameramen often encounter issues such as hand shake or unstable footing when shooting with handheld photography equipment, leading to compromised photo quality. Therefore, when using the photography or videography equipment, people always need a camera monopod to stabilize the photography equipment, thereby allowing them to take more beautiful and high-quality photos.

The camera monopod is generally equipped with a control handle, which is operated to lock or unlock the telescopic adjustment function of the support leg of the camera monopod. In the prior art, the control handle is an electrically controlled handle that sends control signals to a support leg locking assembly to control its locking or unlocking. However, during prolonged outdoor use, the battery of the handle is easily depleted, which requires carrying of an additional device such as a charger or a power bank, thereby increasing the carrying burden and causing inconvenience in use.

### SUMMARY

To overcome the deficiencies in the prior art, the present disclosure provides a drive control apparatus for a monopod, aiming to solve the technical problem of inconvenient use of an electrically controlled handle in the prior art.

To solve the technical problems, the present disclosure adopts the following technical solution: a drive control apparatus for a monopod, the improvement of which lies in that it includes:
a handle base, internally provided with a cavity for accommodating a fluid medium;
a moving member, slidably mounted in the cavity, where an outer wall of the moving member is sealed against an inner wall of the cavity, the moving member divides the cavity into a first accommodating cavity and a second accommodating cavity, and the moving member is provided with a first through hole for communication between the first accommodating cavity and the second accommodating cavity; and
a handle body, rotatably mounted on the handle base, where one end of the handle body extending into the handle base abuts against a bottom of the moving member, and the handle body is configured to drive the moving member to move in a direction from the second accommodating cavity toward the first accommodating cavity, so as to press the fluid medium from the first accommodating cavity into the second accommodating cavity; and
where the handle base is further provided with a second through hole in communication with the second accommodating cavity.

In the above structure, a moving piston is further included;
the moving piston is slidably mounted in the first through hole of the moving member, an outer wall of the moving piston is sealed against an inner wall of the first through hole, and a third through hole for communication between the first accommodating cavity and the second accommodating cavity is reserved in the moving piston.

In the above structure, the first through hole of the moving member is a stepped hole formed by a blind hole in communication with the first accommodating cavity and a fourth through hole penetrating through a bottom wall of the blind hole.

In the above structure, the moving piston has a radially protruding and annular protrusion sleeved with a first sealing ring, and when the moving piston is located inside the moving member, the first sealing ring is closely attached to an inner wall of the blind hole, and a bottom end of the moving piston passes through the fourth through hole.

In the above structure, a first elastic member and a second elastic member are further included;
the first elastic member is disposed in the first accommodating cavity, with one end abutting against the moving piston and the other end abutting against an inner wall of the first accommodating cavity, and the first elastic member is configured to drive the moving piston to move in a direction away from the first accommodating cavity when the moving member moves in a direction toward the first accommodating cavity; and
the second elastic member is sleeved on the moving piston, with one end abutting against the moving piston and the other end abutting against the moving member, and the second elastic member is configured to provide a thrust force for the moving piston to return to an original position thereof.

In the above structure, a pressure relief through hole in communication with the first accommodating cavity is further formed inside the handle base; and
a pressure relief cavity in communication with the first accommodating cavity via the pressure relief through hole is formed inside the handle base;
alternatively, the drive control apparatus for a monopod further includes a liquid storage bag that is in communication with the pressure relief through hole via a conduit.

In the above structure, a pressure relief flow passage is formed between an outer surface of the moving member and an inner wall of the first accommodating cavity, and the pressure relief through hole is located at a tail end of the pressure relief flow passage.

In the above structure, an annular second sealing ring is disposed in the first accommodating cavity and located in the pressure relief flow passage;
at least a pressing portion is disposed on the outer surface of the moving member, and the pressing portion has a diameter gradually decreasing in the direction from the second accommodating cavity toward the first accommodating cavity; and
the pressure relief flow passage has a blocked state and a pressure relief state, where when the pressure relief flow passage is in the blocked state, the moving member moves in a direction toward the first accommodating cavity, and the pressing portion of the moving member presses the second sealing ring to block the pressure relief flow passage; and when the pressure relief flow passage is in the pressure relief state, the pressing portion does not press the second sealing ring, and the pressure relief flow passage remains open.

In the above structure, an annular groove for mounting the second sealing ring is reserved in the inner wall of the first accommodating cavity and located in the pressure relief flow passage.

In the above structure, a third sealing ring is disposed on the inner wall of the first accommodating cavity and located below the second sealing ring, and the pressure relief through hole is located between the third sealing ring and the second sealing ring.

In the above structure, the drive control apparatus for a monopod further includes:
a rotating shaft, mounted inside the handle base, where the rotating shaft penetrates through the handle body, such that the handle body rotates about the rotating shaft;
a knob, rotatably disposed at one end of the handle body;
an abutment block, located on one side of the handle body facing the handle base and connected to the knob; and
a lifting member, rotatably mounted on the rotating shaft, where one end of the lifting member acts on the bottom of the moving member, the other end of the lifting member is provided with an abutment surface and an accommodating opening disposed adjacently in an axial direction of the rotating shaft, and the abutment block is capable of abutting against a first position of the abutment surface or being accommodated in a second position of the accommodating opening as the knob rotates.

The present disclosure further provides a monopod, the improvement of which lies in that it includes the drive control apparatus for a monopod, and further includes:
several sequentially sleeved tube members, where a locking structure is disposed between any two adjacent ones of the tube members, the drive control apparatus for a monopod is mounted at a top end of the outermost tube member, and the tube members are in communication with the second through hole; and
a driving mechanism, disposed inside the tube members and drivingly connected to each of the locking structures, where the driving mechanism is configured to drive each of the locking structures to set every two adjacent ones of the tube members in a relatively fixed state or a relatively slidable state.

Further, the several sequentially sleeved tube members at least include a first tube member, a second tube member slidably disposed in the first tube member, and a third tube member slidably disposed in the second tube member; and
the locking structure includes a first locking structure and a second locking structure, where the first locking structure is configured to set the first tube member and the second tube member in the relatively fixed state or the relatively slidable state, and the second locking structure is configured to set the second tube member and the third tube member in the relatively fixed state or the relatively slidable state.

Further, the first tube member includes a first sub-tube member and a second sub-tube member sleeved inside the first sub-tube member, and the second tube member includes a third sub-tube member and a fourth sub-tube member sleeved inside the third sub-tube member; and
the driving mechanism includes a first driving member, where the first driving member is disposed at one end of the first sub-tube member, an actuating end of the first driving member extends into the first sub-tube member and is connected to one end of the second sub-tube member, and the first driving member is configured to drive the second sub-tube member to move.

Further, the first driving member includes:
a mounting housing, having a first cavity, where a top wall of the mounting housing is provided with a first opening, and a bottom wall of the mounting housing is provided with a second opening;
a fixing base, mounted at the first opening of the mounting housing and at least partially extending into the first cavity; and
a piston sleeve, slidably disposed in the first cavity and sleeved on a portion of the fixing base extending into the first cavity, where a second cavity for accommodating a fluid medium is formed between the fixing base and the piston sleeve, a fifth through hole in communication with the second cavity is further reserved in the fixing base and is in communication with the second through hole, and
one end of the piston sleeve away from the fixing base passes through the second opening and is connected to one end of the second sub-tube member.

Further, the driving mechanism further includes a second driving member capable of being linked with the first driving member, where the second driving member is disposed at one end of the third sub-tube member, an actuating end of the second driving member extends into the third sub-tube member and is connected to one end of the fourth sub-tube member, the second driving member is configured to drive the fourth sub-tube member to move axially relative to the third sub-tube member, and the second driving member has the same structure as the first driving member.

Further, the driving mechanism further includes a fluid conduit;
a sixth through hole in communication with the second cavity is further reserved in the piston sleeve of the first driving member; and
a seventh through hole in communication with a second cavity of the second driving member is reserved in a fixing base of the second driving member, and both ends of the fluid conduit are connected to the sixth through hole and the seventh through hole respectively.

The present disclosure has the following beneficial effects: compared with the electrically controlled handle in the prior art, a driving force required for multi-section telescopic adjustment of the monopod can be provided without using electricity, thereby making the actual use more convenient and enhancing the user experience. The handle body adopts the lever principle, such that the moving member can be driven to move by applying a relatively small force to the handle body, making it suitable for use by all groups of people and widely applicable.

### BRIEF DESCRIPTION OF THE DRAWINGS

FIG. 1 is a schematic diagram of a three-dimensional structure of a drive control apparatus for a monopod according to the present disclosure;
FIG. 2 is a schematic exploded view of a drive control apparatus for a monopod according to the present disclosure;
FIG. 3 is a schematic cross-sectional view of a drive control apparatus for a monopod according to the present disclosure;
FIG. 4 is a schematic diagram of an assembled structure of a handle body, a lifting member, and an abutment block according to the present disclosure;
FIG. 5 is a schematic diagram of an exploded structure of a handle body, a lifting member, and an abutment block according to the present disclosure;
FIG. 6 is a schematic diagram of a three-dimensional structure of a monopod according to the present disclosure;
FIG. 7 is a side view of a monopod according to the present disclosure;
FIG. 8 is a schematic cross-sectional view at E-E in FIG. 7;
FIG. 9 is a partially enlarged view at A in FIG. 8; and
FIG. 10 is a partially enlarged view at B in FIG. 8.

In the drawings: drive control apparatus 100;
handle base 10, base body 101, cover body 102, threaded stud 103, first accommodating cavity 104, second accommodating cavity 105, second through hole 106, pressure relief through hole 107, pressure relief cavity 108, and injection opening 109;
moving member 20, first through hole 201, and second sealing ring 202;
handle body 30, rotating shaft 301, knob 302, abutment block 303, lifting member 304, abutment surface 3041, accommodating opening 3042, first torsion spring 305, and second torsion spring 306;
moving piston 40, third through hole 401, protrusion 402, and first sealing ring 403;
first elastic member 501;
liquid storage bag 60;
tube member 70;
first tube member 701, first sub-tube member 7011, and second sub-tube member 7012;
second tube member 702, third sub-tube member 7021, and fourth sub-tube member 7022;
third tube member 703;
locking structure 80, first locking structure 801, and second locking structure 802;
first driving member 901, mounting housing 9011, fixing base 9012, piston sleeve 9013, fifth through hole 9014, sixth through hole 9015, and elastic member 9016;
second driving member 902, and seventh through hole 9021; and
fluid conduit 903.

### DETAILED DESCRIPTION OF THE EMBODIMENTS

The technical solutions in the embodiments of the present disclosure will be clearly and completely described below with reference to the accompanying drawings in the embodiments of the present disclosure. Apparently, the described embodiments are merely some rather than all of the embodiments of the present disclosure. All other embodiments obtained by those of ordinary skill in the art based on the embodiments in the present disclosure without creative efforts shall fall within the scope of protection of the present disclosure.

It should be noted that all directional indications (such as up, down, left, right, front, back...) in the embodiments of the present disclosure are only used to explain relative positions, motion states, etc. of components in a specific pose (as shown in the figure), and if the specific pose changes, the directional indication also changes accordingly.

It should also be noted that when one element is referred to as being "fixed to" or "disposed on" another element, it may be directly located on another element or an intervening element may exist at the same time. When one element is referred to as being "connected to" another element, it may be directly connected to another element or an intervening element may exist at the same time.

In addition, the descriptions involving "first", "second", etc. in the present disclosure are only for descriptive purposes and cannot be understood as indicating or implying relative importance thereof or implying the number of indicated technical features. Thus, features defined with "first" and "second" can explicitly or implicitly include at least one of the features. Furthermore, the technical solutions among the various embodiments can be combined with one another, but must be based on the implementation by those of ordinary skill in the art. When the combination of the technical solutions is contradictory or cannot be implemented, it should be considered that such combination of the technical solutions does not exist and is not within the scope of protection of the present disclosure.

With the increasing demand for photography, videography, and other professional image creation, the importance of various stable support devices has become more prominent. As a core auxiliary apparatus for professional shooting, the camera monopod can provide a stable and reliable support platform for cameras, video cameras, and other devices, thus effectively eliminating inevitable shaking encountered in handheld shooting and significantly improving the imaging quality.

Currently, photographic support systems available on the market mainly include monopods, tripods, and special-purpose support apparatuses for specific scenarios. These products generally adopt a multi-section telescopic support leg structure, and achieve multi-dimensional stable support for shooting equipment through extension/retraction and angle adjustment of the support legs. Existing support leg assemblies mostly adopt a multi-section sleeve design, which relies on the telescopic fit between the sleeves to achieve height adjustment, and combines friction locking, threaded fastening, or quick-locking mechanisms to achieve positional fixation.

In the prior art, an electronically controlled handle is commonly used to achieve multi-section telescopic adjustment of the monopod, and its working principle is to output control signals through opening and closing of the handle, thereby controlling a motor or other actuating components. This type of electronically controlled handle requires mounting a battery, a motor, and other components inside the monopod, which additionally occupies the internal space of the monopod. When the battery runs out, it needs to be charged, which requires carrying a charger, a power bank, or other devices, making it very inconvenient to use. Once the power is exhausted, the monopod cannot achieve multi-section telescopic adjustment, resulting in a very poor user experience. In order to solve the above problems, the present disclosure provides a drive control apparatus for a monopod, which can provide a driving force required for multi-section telescopic adjustment of the monopod without using electricity, thereby making the use convenient and enhancing the user experience.

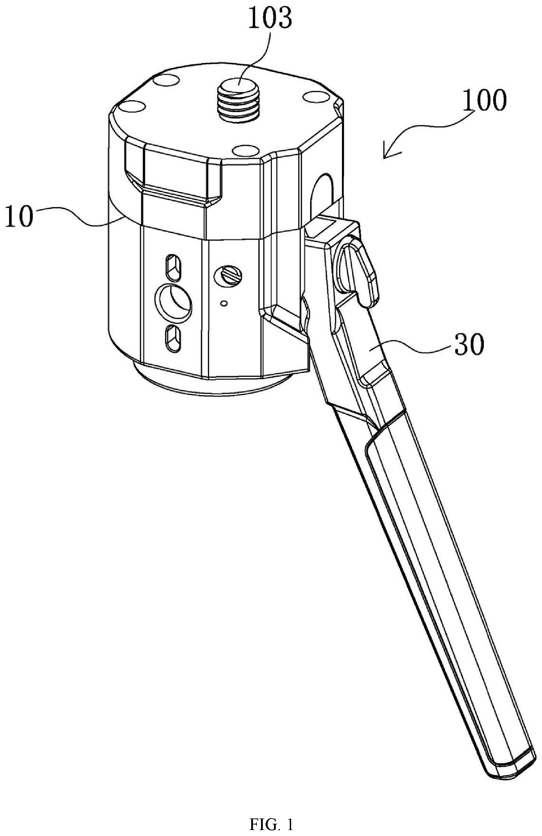

Referring to FIG. 1, FIG. 2, and FIG. 3, the present disclosure provides a drive control apparatus 100 for a monopod, including a handle base 10, a moving member 20, and a handle body 30, where the handle base 10 is formed by combining a base body 101 with a cover body 102. In this embodiment, screws are used to achieve a fixed connection between the base body and the cover body. Certainly, in other embodiments, other means may also be used, which will not be repeated herein. A threaded stud 103 is fixedly mounted at a top of the cover body 102. The threaded stud 103 is designed in a standardized manner and is configured to mount various photographic devices, such as a camera, a video camera, and a mobile phone, which are fixed to the handle base 10 via a tripod head, a bracket, a shoulder-mounted kit, etc. The camera may be mounted to the handle base 10 via a half-enclosed or fully-enclosed camera protection frame, the bottom of which is provided with a threaded hole that matches the threaded stud 103. The handle base 10 is designed with a balance between lightweight construction and strength, and may be made of a high-strength aluminum alloy or a carbon fiber composite material, thereby ensuring sufficient support strength while minimizing the overall weight.

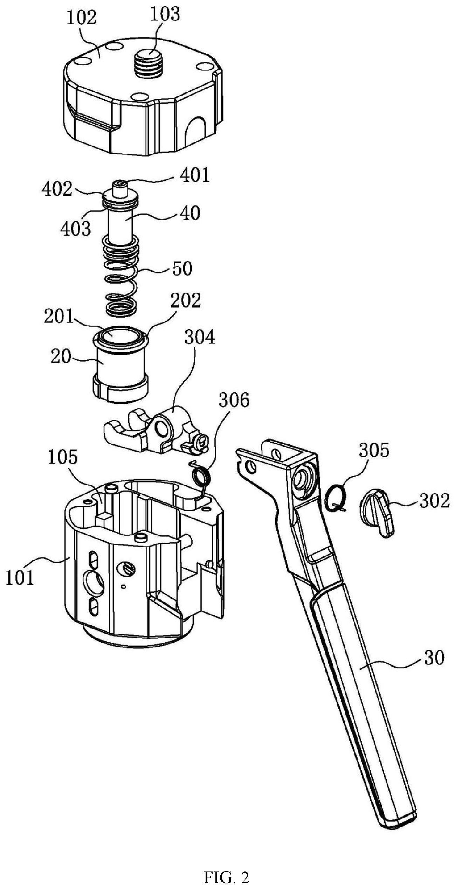

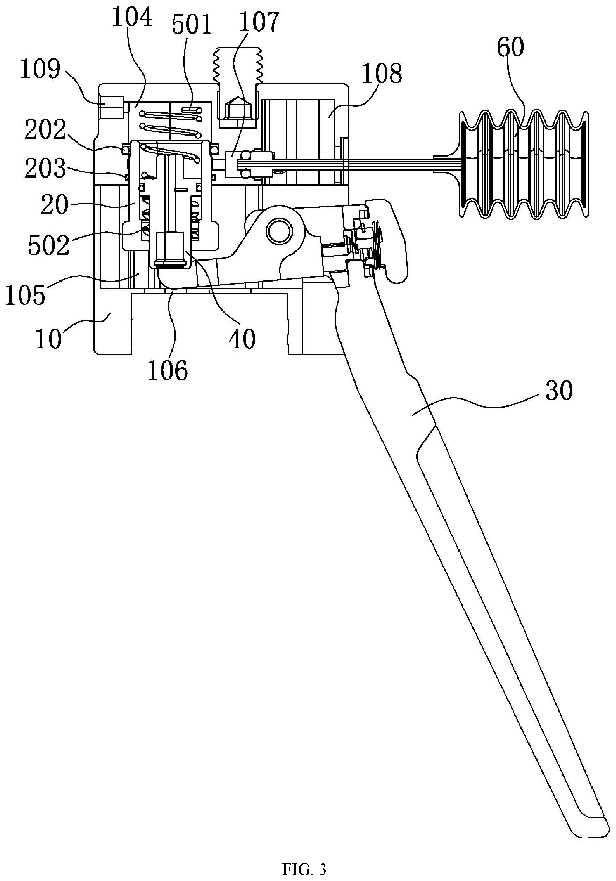

Referring to FIG. 2 and FIG. 3, the handle base 10 is internally provided with a cavity for accommodating a fluid medium. The fluid medium may be a dedicated hydraulic oil, which has good fluidity and stability, does not solidify at -20°, and does not leak at a high temperature of 60°. In another embodiment, the fluid medium is a gas. The present disclosure does not specifically limit the fluid medium. The moving member 20 is mounted in the cavity, and an outer wall of the moving member 20 is sealed against an inner wall of the cavity. A specific sealing form will be further described below. With such a structure, the moving member 20 can slide in the cavity. In this embodiment, the moving member 20 is a cylindrical body, with a first through hole 201 penetrating through a center thereof; and the moving member 20 is located at a junction of the cover body 102 and the base body 101, and divides the cavity inside the handle base 10 into a first accommodating cavity 104 and a second accommodating cavity 105. Certainly, it can also be understood that the first accommodating cavity 104 is formed in the cover body 102, the second accommodating cavity 105 is formed in the base body 101, and after the cover body 102 and the base body 101 are combined, the first accommodating cavity 104 and the second accommodating cavity 105 form the cavity inside the handle base 10.

With continued reference to FIG. 3, the handle body 30 is rotatably mounted on the handle base 10. In this embodiment, the handle body 30 is hingedly mounted on the handle base 10. One end of the handle body 30 extending into the handle base 10 abuts against a bottom of the moving member 20. When the handle body 30 rotates, the end of the handle body 30 extending into the handle base 10 pries the moving member 20, causing the moving member 20 to slide in the cavity of the handle base 10. Specifically, the moving member 20 moves in a direction from the second accommodating cavity 105 toward the first accommodating cavity 104. As a portion of the moving member 20 entering the first accommodating cavity 104 increases and the first accommodating cavity 104 is in a sealed state, the fluid medium in the first accommodating cavity 104 is pressed into the second accommodating cavity 105 along the first through hole 201 of the moving member 20. In this solution, a bottom wall of the handle base 10 is further provided with a second through hole 106 in communication with the second accommodating cavity 105, and the fluid medium pressed into the second accommodating cavity 105 may be discharged along the second through hole 106, thereby providing a driving force required for multi-section telescopic adjustment of the monopod.

With such a structure, the present disclosure provides a drive control apparatus 100 for a monopod, which, compared with an electrically controlled handle in the prior art, can provide a driving force required for multi-section telescopic adjustment of the monopod without using electricity, thereby making the actual use more convenient and enhancing the user experience. The handle body 30 adopts the lever principle, such that the moving member 20 can be driven to move by applying a relatively small force to the handle body 30, making it suitable for use by all groups of people and widely applicable.

Based on the above embodiment, and with reference to FIG. 2 and FIG. 3, the drive control apparatus 100 for a monopod further includes a moving piston 40, where the moving piston 40 is slidably mounted in the first through hole 201 of the moving member 20, an outer wall of the moving piston 40 is sealed against an inner wall of the first through hole 201, and a third through hole 401 for communication between the first accommodating cavity 104 and the second accommodating cavity 105 is reserved in the moving piston 40. In this embodiment, through the design of the moving piston 40, after the handle body 30 is rapidly pressed down, the pressure in the first accommodating cavity 104 increases rapidly. At this time, the fluid medium in the first accommodating cavity 104 can not only enter the second accommodating cavity 105 from the third through hole 401 of the moving piston 40, but also drive the moving piston 40 to move inside the moving member 20, thereby increasing the volume of the first accommodating cavity 104. In this case, a user will not feel that the handle body 30 is difficult to press down. Through the design of the moving piston 40, the handle body 30 provides good tactile feedback whether it is pressed rapidly or slowly, thereby enhancing the user experience.

Further, referring to FIG. 3, the first through hole 201 of the moving member 20 is a stepped hole formed by a blind hole in communication with the first accommodating cavity 104 and a fourth through hole penetrating through a bottom wall of the blind hole. To improve the sealing performance, the moving piston 40 is provided with a radially protruding and annular protrusion 402, where a first sealing ring 403 is sleeved on the protrusion 402. When the moving piston 40 is located inside the moving member 20, the first sealing ring 403 is closely attached to an inner wall of the blind hole, such that the fluid medium in the first accommodating cavity 104 can only be discharged into the second accommodating cavity 105 from the third through hole 401 of the moving piston 40. Additionally, in this embodiment, a bottom end of the moving piston 40 passes through the fourth through hole, and a diameter of the fourth through hole is slightly greater than a diameter of the bottom end of the moving piston 40, such that the bottom end of the moving piston 40 can freely pass through the fourth through hole. Moreover, the fourth through hole guides the movement of the moving piston 40 in the moving member 20, such that the moving piston 40 can smoothly move up and down in the moving member 20. In this embodiment, the structural design of the protrusion 402 of the moving piston 40 can increase its contact area with the fluid medium in the first accommodating cavity 104, such that the moving piston 40 can slide more smoothly in the moving member 20, and the user can obtain good tactile feedback during the process of pressing the handle body 30.

As a preferred embodiment, with continued reference to FIG. 2 and FIG. 3, the drive control apparatus 100 for a monopod further includes a first elastic member 501. In this embodiment, the first elastic member 501 is a tower-shaped spring, and the first elastic member 501 is disposed in the first accommodating cavity 104, with one end abutting against the moving piston 40 and the other end abutting against an inner wall of the first accommodating cavity 104. In this embodiment, the first elastic member 501 is sleeved on the moving piston 40. Due to the presence of the first elastic member 501, with reference to FIG. 3, during upward movement of the moving member 20, the moving piston 40 is driven to move together therewith, and the first elastic member 501 can apply an elastic force to the moving piston 40, thereby causing a relative displacement between the moving piston 40 and the moving member 20. Further, the drive control apparatus 100 for a monopod further includes a second elastic member 502. In this embodiment, the second elastic member 502 is a wave spring, with one end abutting against the moving piston 40 and the other end abutting against the moving member 20, and the second elastic member 502 is configured to provide a thrust force for the moving piston 40 to return to an original position thereof.

In the above embodiment, one end of the first elastic member 501 abuts against a top surface of the protrusion 402 of the moving piston 40, and the other end of the first elastic member 501 abuts against the inner wall of the first accommodating cavity 104. The second elastic member 502 is sleeved at a lower end of the moving piston 40, and has one end abutting against a bottom surface of the protrusion of the moving piston 40 and the other end abutting against the bottom wall of the blind hole. Through the design of the first elastic member 501 and the second elastic member 502, the moving piston 40 can respond to various pressure changes, thereby further enhancing the tactile feedback for the user. Moreover, the second elastic member 502 can push the moving piston 40 to return to the original position thereof, such that the drive control apparatus can be used repeatedly. In another specific embodiment, based on the above embodiment, and with reference to FIG. 3, a pressure relief through hole 107 in communication with the first accommodating cavity 104 is further formed inside the handle base 10; and a pressure relief cavity 108 in communication with the first accommodating cavity 104 via the pressure relief through hole 107 is formed inside the handle base 10. The monopod needs to be applied in different environments. For example, considering the thermal expansion and contraction of the fluid medium, when the liquid pressure in the first accommodating cavity 104 is excessively high, the fluid medium can be discharged from the pressure relief through hole 107 into the pressure relief cavity 108. In another embodiment, the pressure relief cavity 108 may not be designed inside the handle base 10, and a liquid storage bag 60 may be in direct communication with the pressure relief through hole 107 via a conduit, which can also achieve the same function. FIG. 3 merely illustrates these two embodiments by way of example.

As for a specific manner in which pressure relief can be achieved, a specific position of the pressure relief through hole 107 needs to be taken into account. For example, in this embodiment, a specific feasible solution is provided. With continued reference to FIG. 3, a gap is reserved between an outer surface of the moving member 20 and the inner wall of the first accommodating cavity 104, which forms a pressure relief flow passage. The pressure relief through hole 107 is located at a tail end of the pressure relief flow passage. When the pressure in the first accommodating cavity 104 is excessively high, the excess fluid medium is discharged through the pressure relief flow passage. In this embodiment, an annular second sealing ring 202 is disposed in the first accommodating cavity 104 and located in the pressure relief flow passage. In the state shown in FIG. 3, the second sealing ring 202 is sleeved at a top of the moving member 20, but a gap is reserved between the second sealing ring 202 and the top of the moving member 20. At this time, the fluid medium can pass through the gap between the second sealing ring 202 and the top of the moving member 20 and the gap between the second sealing ring 202 and the inner wall of the first accommodating cavity 104.

In this embodiment, the moving member 20 is cylindrical, the outer surface of the moving member 20 is provided with a pressing portion, and the pressing portion has a diameter gradually decreasing in the direction from the second accommodating cavity 105 toward the first accommodating cavity 104, thereby forming a region with a gradually changing diameter on the outer surface of the moving member 20. Moreover, in this embodiment, after the diameter of the pressing portion decreases to the minimum, it continues to extend at the minimum diameter to form the top of the moving member 20. Therefore, it can be understood that the diameter of the top of the moving member is equal to the minimum diameter of the pressing portion. It should be further noted that in this embodiment, the above pressure relief flow passage has a blocked state and a pressure relief state. In the blocked state, the first accommodating cavity 104 and the pressure relief cavity 108 (or the liquid storage bag 60) are isolated from each other, and the fluid medium cannot flow. At this time, the moving member 20 needs to move in a direction toward the first accommodating cavity 104, and the second sealing ring 202 is pressed by the pressing portion of the moving member 20 to deform to block the pressure relief flow passage. FIG. 3 is a schematic diagram of the pressure relief state. In the pressure relief state, the pressing portion of the moving member 20 does not press the second sealing ring 202, the pressure relief flow passage remains open, and the fluid medium in the first accommodating cavity 104 can flow into the pressure relief cavity 108 (or the liquid storage bag 60) through the pressure relief flow passage.

In conjunction with the above contents, the operating principle of the pressure relief flow passage in the present disclosure is described in detail. After the moving member 20 moves in the direction from the second accommodating cavity 105 toward the first accommodating cavity 104, the pressing portion at the top of the moving member 20 presses the second sealing ring 202 to block the pressure relief flow passage. Therefore, in the state shown in FIG. 3, if the pressure of the fluid medium in the cavity of the handle base 10 increases due to external stimuli (for example, a rise in ambient temperature), the fluid medium can be discharged through the pressure relief through hole 107. Certainly, it should be further noted that, after the user presses the handle body 30 downward, the moving member 20 is driven to move upward. At this time, the pressing portion on the outer surface of the moving member 20 presses the second sealing ring 202 to block the pressure relief flow passage, and the fluid medium in the first accommodating cavity 104 cannot flow into the pressure relief cavity 108 or the liquid storage bag from the pressure relief through hole 107. This structural design ensures that the drive control apparatus 100 can be suitable for use in different environments, thereby expanding the application range of the product. Additionally, an outer wall of the handle base 10 is further provided with an injection opening 109 in communication with the first accommodating cavity 104, through which the fluid medium can be replenished into the first accommodating cavity 104. It can be understood that the injection opening 109 is mounted with a cap (not shown in the figure). When the fluid medium needs to be injected, the cap is removed for injection. After the injection of the fluid medium is completed, the cap tightly covers the injection opening 109. The cap is required to tightly cover the injection opening 109 with a certain strength to prevent the fluid medium from flowing out of the first accommodating cavity 104 after the pressure in the first accommodating cavity 104 increases. These are foreseeable common knowledge in the art and will not be repeated herein.

Regarding the mounting of the second sealing ring 202, with reference to FIG. 3, the present disclosure provides a specific embodiment in which an annular groove for mounting the second sealing ring 202 is reserved in the inner wall of the first accommodating cavity 104 and located in the pressure relief flow passage. The annular groove has a depth of slightly less than the diameter of the second sealing ring 202 and a width of slightly greater than the diameter of the second sealing ring 202, such that the outer surface of the moving member 20 can smoothly press the second sealing ring 202. Moreover, a space for accommodating the second sealing ring 202 after being pressed and deformed is reserved in the annular groove, thereby preventing the second sealing ring 202 from being disengaged from the annular groove due to the pressing by the moving member 20, and thus improving the reliability of the apparatus during use.

Additionally, in the above embodiment, to ensure the sealing performance of the outer surface of the moving member 20, a third sealing ring 203 is further disposed on the inner wall of the first accommodating cavity 104. It can be understood that, to achieve a sealing effect, a position of the third sealing ring 203 in contact with the moving member 20 must be located between the pressing portion and a bottom end of the moving member. In this embodiment, a specific implementable solution is provided in which the third sealing ring 203 is located below the second sealing ring 202, and an opening of the pressure relief through hole 107 in the first accommodating cavity 104 is located between the third sealing ring 203 and the second sealing ring 202. This design can prevent the fluid medium in the pressure relief flow passage from entering the second accommodating cavity 105 along the gap between the moving member 20 and the inner wall of the first accommodating cavity 104.

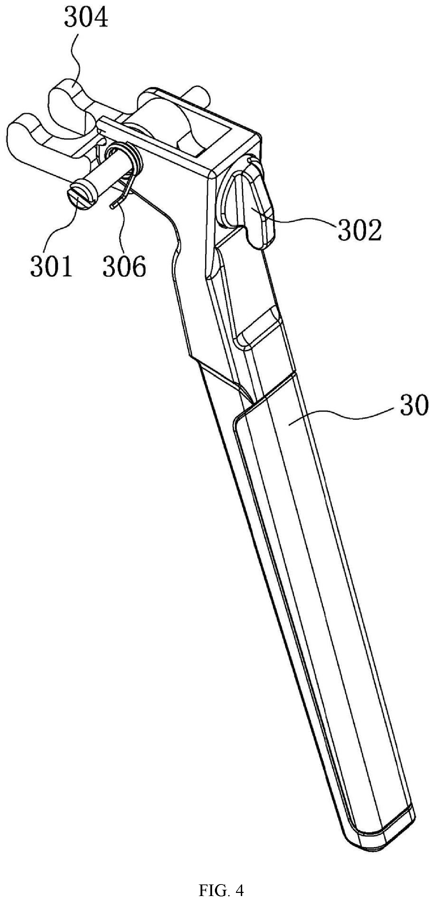

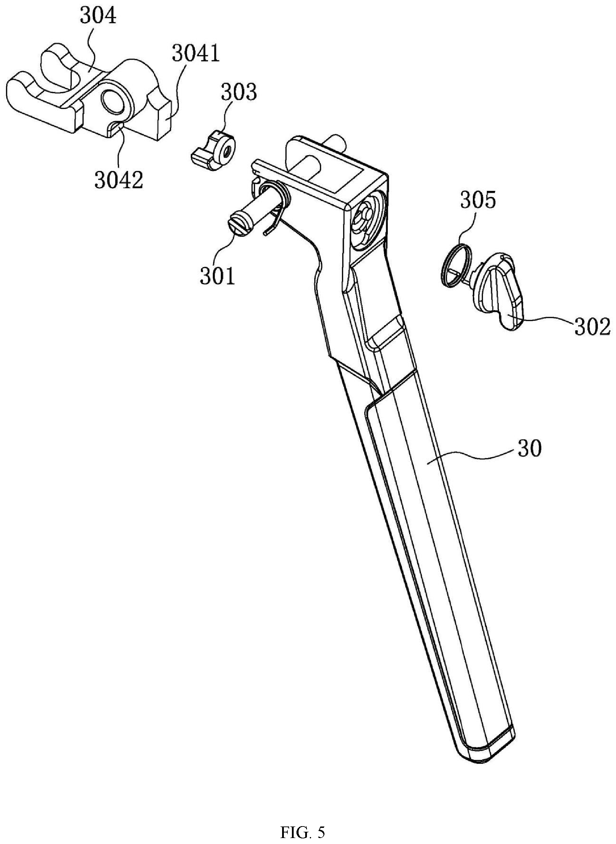

Regarding the handle body 30 and its storage manner, and with reference to FIG. 2, FIG. 4, and FIG. 5, the present disclosure provides a specific embodiment in which the drive control apparatus 100 for a monopod further includes a rotating shaft 301, a knob 302, an abutment block 303, and a lifting member 304. The rotating shaft 301 is mounted inside the handle base 10 and penetrates through the handle body 30, such that the handle body 30 can rotate about the rotating shaft 301. The knob 302 is rotatably disposed at one end of the handle body 30, and a first torsion spring 305 is disposed between the knob 302 and the handle body 30. The first torsion spring 305 can provide the knob 302 with a restoring force when rotated. With reference to FIG. 5, the abutment block 303 is located on one side of the handle body 30 facing the handle base 10 and is connected to the knob 302. In this embodiment, the abutment block 303 is semi-cylindrical in shape. Further, the lifting member 304 is rotatably mounted on the rotating shaft 301, one end of the lifting member 304 acts on the bottom of the moving member 20, the other end of the lifting member 304 is provided with an abutment surface 3041 and an accommodating opening 3042 disposed adjacently in an axial direction of the rotating shaft 301, and the abutment block 303 is capable of abutting against a first position of the abutment surface 3041 or being accommodated in a second position of the accommodating opening 3042 as the knob 302 rotates. In addition, a second torsion spring 306 is further sleeved on the rotating shaft 301, with one end clamped on the handle base 10 and the other end clamped on the handle body 30, such that the handle body 30 has a restoring force after being pressed.

When the abutment block 303 is in the first position, the abutment block 303 contacts the abutment surface 3041 of the lifting member 304. When the handle body 30 is pressed down, a rotating force can be directly transmitted to the lifting member 304 via the abutment block 303, thereby driving the moving member 20 to move. When the knob 302 is rotated, the knob 302 drives the abutment block 303 to rotate together, such that the abutment block 303 is located in the accommodating opening 3042 of the lifting member 304, and the abutment block 303 is in the second position. At this time, the handle body 30 can be rotated to a vertical state in FIG. 3, thereby enabling storage of the handle body 30 and making the apparatus more convenient to carry.

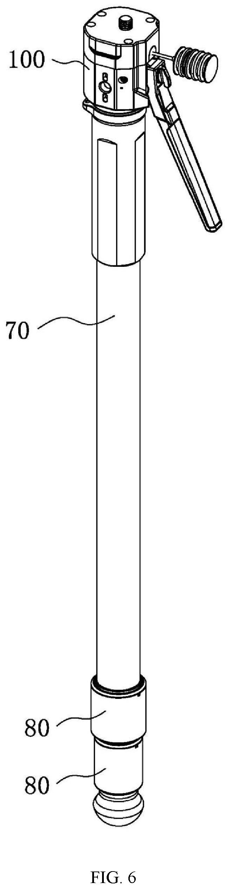

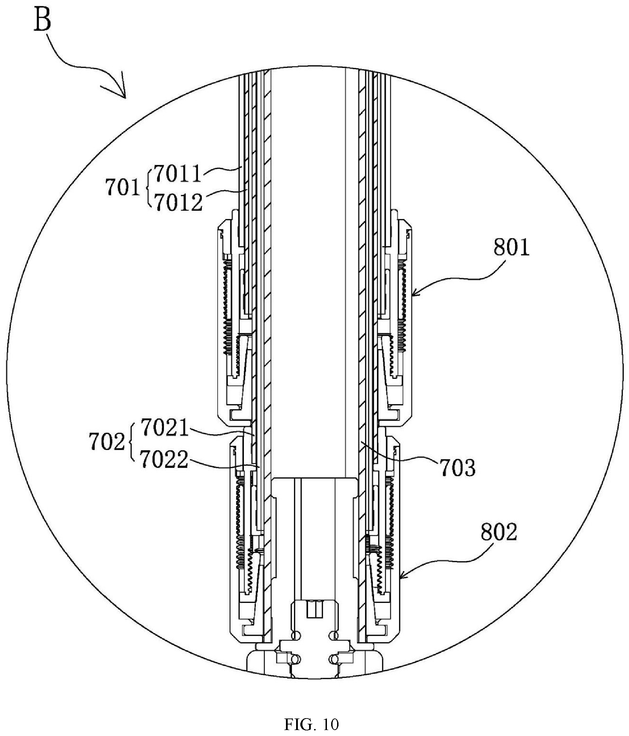

With reference to FIG. 6 to FIG. 10, the present disclosure further provides a monopod, including the drive control apparatus 100 for a monopod according to any of the above embodiments. Therefore, the monopod in this embodiment has all the technical effects mentioned in the above embodiments, and the technical effects of the drive control apparatus 100 for a monopod will not be further described in this embodiment.

Specifically, in this embodiment, the monopod includes several sequentially sleeved tube members 70 and a driving mechanism (not shown in the figure), where the drive control apparatus 100 for a monopod in the above embodiments is mounted at a top end of the outermost tube member 70, and the tube members 70 are in communication with the second through hole 106. The fluid medium flowing out of the second through hole 106 enters the tube members 70 to provide a driving force for the tube members 70. With reference to FIG. 6, a locking structure 80 is disposed between any two adjacent ones of the tube members 70, and the driving mechanism is disposed inside the tube members 70 and drivingly connected to each of the locking structures 80, where the driving mechanism is configured to drive each of the locking structures 80 to set every two adjacent ones of the tube members 70 in a relatively fixed state or a relatively slidable state.

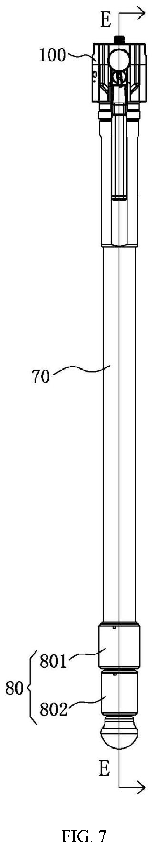

In this embodiment, the several sequentially sleeved tube members 70 include a first tube member 701, a second tube member 702 slidably disposed in the first tube member 701, and a third tube member 703 slidably disposed in the second tube member 702. However, it should be noted that the present disclosure does not limit the specific number of tube members 70. In this embodiment, only the first tube member 701, the second tube member 702, and the third tube member 703 are used as a preferred specific example for explanation. In FIG. 6 and FIG. 7, the third tube member 703 is retracted into the second tube member 702, and the second tube member 702 is retracted into the first tube member 701, so they are not visible in the figures. To cooperate with the first tube member 701, the second tube member 702, and the third tube member 703, in this embodiment, the locking structure 80 includes a first locking structure 801 and a second locking structure 802, where the first locking structure 801 is configured to set the first tube member 701 and the second tube member 702 in the relatively fixed state or the relatively slidable state, and the second locking structure 802 is configured to set the second tube member 702 and the third tube member 703 in the relatively fixed state or the relatively slidable state.

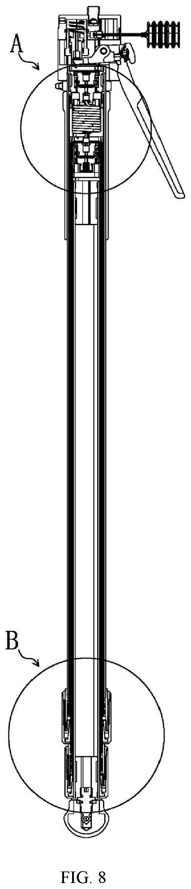

Regarding the specific structures of the first tube member 701, the second tube member 702, and the third tube member 703, and with reference to FIG. 8, FIG. 9, and FIG. 10, the first tube member 701 includes a first sub-tube member 7011 and a second sub-tube member 7012 sleeved inside the first sub-tube member 7011, and the second tube member 702 includes a third sub-tube member 7021 and a fourth sub-tube member 7022 sleeved inside the third sub-tube member 7021; and the driving mechanism includes a first driving member 901, where the first driving member 901 is disposed at one end of the first sub-tube member 7011, an actuating end of the first driving member 901 extends into the first sub-tube member 7011 and is connected to one end of the second sub-tube member 7012, and the first driving member 901 is configured to drive the second sub-tube member 7012 to move. By means of the first locking structure 801, the first tube member 701 and the second tube member 702 can be relatively fixed or allowed to slide relative to each other.

Furthermore, the driving mechanism further includes a second driving member 902 capable of being linked with the first driving member 901, where the second driving member 902 is disposed at one end of the third sub-tube member 7021, an actuating end of the second driving member 902 extends into the third sub-tube member 7021 and is connected to one end of the fourth sub-tube member 7022, the second driving member 902 is configured to drive the fourth sub-tube member 7022 to move axially relative to the third sub-tube member 7021, and the second driving member 902 has the same structure as the first driving member 901. Therefore, the first locking structure 801 and the second locking structure 802 are configured to control a relative state between the first tube member 701 and the second tube member 702 and a relative state between the second tube member 702 and the third tube member 703 respectively. With the above technical solution, an accurate, efficient, and stable locking function is achieved, thereby providing an optimized mechanical solution for adjusting a support leg of a photographic support apparatus.

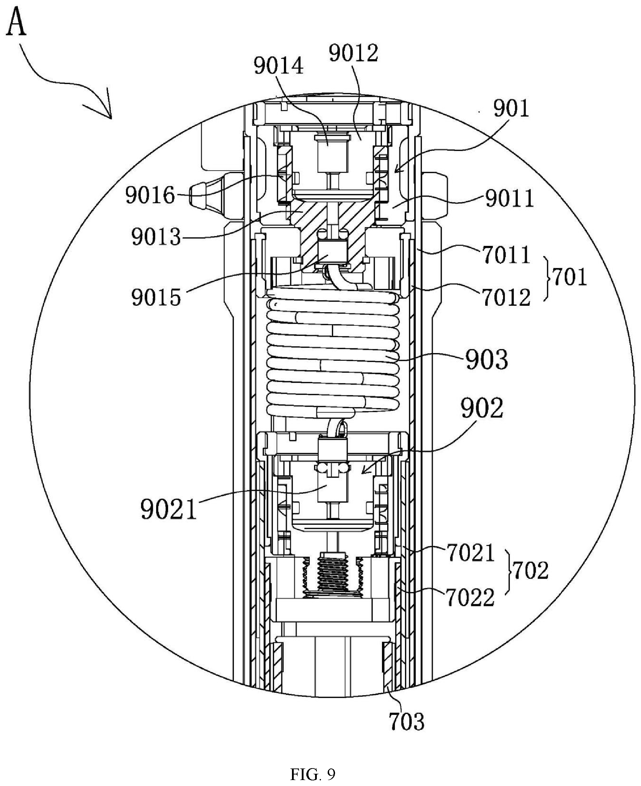

Referring to FIG. 9, with respect to the first driving member 901 and the second driving member 902, the present disclosure provides a specific embodiment in which the first driving member 901 includes a mounting housing 9011, a fixing base 9012, and a piston sleeve 9013. The mounting housing 9011 has a first cavity and is provided with a first opening in a top wall and a second opening in a bottom wall. The fixing base 9012 is mounted at the first opening of the mounting housing 9011 and at least partially extends into the first cavity. The piston sleeve 9013 is slidably disposed in the first cavity and sleeved on a portion of the fixing base 9012 that extends into the first cavity. A second cavity for accommodating a fluid medium is formed between the fixing base 9012 and the piston sleeve 9013. A fifth through hole 9014 in communication with the second cavity is further reserved in the fixing base 9012 and is in communication with the second through hole 106. One end of the piston sleeve 9013 away from the fixing base 9012 passes through the second opening and is connected to one end of the second sub-tube member 7012. With such a structure, the fluid medium discharged from the second through hole 106 enters the second cavity along the fifth through hole 9014 to push the piston sleeve 9013 to move relative to the fixing base 9012, thereby driving the second sub-tube member 7012 to move.

With continued reference to FIG. 9, the driving mechanism further includes a fluid conduit 903, where a sixth through hole 9015 in communication with the second cavity is further reserved in the piston sleeve 9013 of the first driving member 901, a seventh through hole 9021 in communication with a second cavity of the second driving member 902 is reserved in a fixing base of the second driving member 902, and both ends of the fluid conduit 903 are connected to the sixth through hole 9015 and the seventh through hole 9021 respectively. By means of this connection, the fluid medium can enter the second driving member 902 along the fluid conduit 903, and the piston sleeve 9013 of the second driving member 902 drives the fourth sub-tube member to move axially relative to the third sub-tube member. In this embodiment, the second driving member 902 has the same structure as the first driving member 901, and also adopts the core components such as the mounting housing 9011 and the piston assembly as described in the foregoing embodiments, thereby achieving structural unity and modularity. This design not only simplifies the design and manufacturing processes, but also enhances the universality and maintainability of the components.

In summary, when the user presses the handle body 30 downward, the fluid medium enters the second accommodating cavity 105 from the first accommodating cavity 104, and is then delivered from the second accommodating cavity 105 into the second cavity of the first driving member 901, while also being conveyed through the fluid conduit 903 into the corresponding cavity of the second driving member 902. In this way, the two driving members can simultaneously receive a same hydraulic signal and perform synchronized actions.

During unlocking operation, as the fluid pressure increases, the piston sleeve 9013 of the first driving member 901 pushes the second sub-tube member 7012 to move downward, while the piston sleeve 9013 of the second driving member 902 also pushes the fourth sub-tube member 7022 to move downward. Such synchronized movement causes the first locking structure 801 and the second locking structure 802 to be released from their locked states almost simultaneously, thereby achieving one-touch unlocking of all the sub-tube members. The user can smoothly adjust the extension lengths of inner tubes of all sections and complete the height adjustment of the support leg in one operation. Similarly, after the height adjustment is completed, the pressure in a hydraulic system is released, and elastic members 9016 in the two driving members simultaneously push their respective piston sleeves 9013 back to their original positions and drive the second sub-tube member 7012 and the fourth sub-tube member back to their locked positions, thereby locking the inner tubes of all sections at the same time, and thus achieving one-touch locking.

In the monopod according to the present disclosure, the several sequentially sleeved tube members are disposed as a telescopic support structure of the support leg, the locking structure is disposed between any two adjacent tube members, and the driving mechanism is disposed to control the plurality of locking structures in a unified manner, where the driving mechanism is drivingly connected to each locking structure and can drive each locking structure to operate, thereby synchronously adjusting the locked or unlocked states of all the tube members. The design of the present disclosure abandons a conventional method of independent locking section by section, utilizes a centralized transmission mechanism to enhance operational convenience, and enables the several sequentially sleeved tube members to conveniently and quickly switch between the relatively fixed state and the relatively slidable state.

The above is a specific description of preferred embodiments of the present disclosure, but the present disclosure is not limited to the embodiments. Those skilled in the art may also make various equivalent modifications or substitutions without departing from the spirit of the present disclosure, and these equivalent modifications or substitutions are all included within the scope of the claims of the present application.

## Claims

1. A drive control apparatus for a monopod, **characterized by** comprising:
a handle base, internally provided with a cavity for accommodating a fluid medium;
a moving member, slidably mounted in the cavity, wherein an outer wall of the moving member is sealed against an inner wall of the cavity, the moving member divides the cavity into a first accommodating cavity and a second accommodating cavity, and the moving member is provided with a first through hole for communication between the first accommodating cavity and the second accommodating cavity; and
a handle body, rotatably mounted on the handle base, wherein one end of the handle body extending into the handle base abuts against a bottom of the moving member, and the handle body is configured to drive the moving member to move in a direction from the second accommodating cavity toward the first accommodating cavity, so as to press the fluid medium from the first accommodating cavity into the second accommodating cavity; and
wherein the handle base is further provided with a second through hole in communication with the second accommodating cavity.

2. The drive control apparatus for a monopod according to claim 1, **characterized by** further comprising a moving piston,
wherein the moving piston is slidably mounted in the first through hole of the moving member, an outer wall of the moving piston is sealed against an inner wall of the first through hole, and a third through hole for communication between the first accommodating cavity and the second accommodating cavity is reserved in the moving piston; and
the first through hole of the moving member is a stepped hole formed by a blind hole in communication with the first accommodating cavity and a fourth through hole penetrating through a bottom wall of the blind hole.

3. The drive control apparatus for a monopod according to claim 2, **characterized in that** the moving piston has a radially protruding and annular protrusion sleeved with a first sealing ring, and when the moving piston is located inside the moving member, the first sealing ring is closely attached to an inner wall of the blind hole, and a bottom end of the moving piston passes through the fourth through hole.

4. The drive control apparatus for a monopod according to claim 2, **characterized by** further comprising a first elastic member and a second elastic member,
wherein the first elastic member is disposed in the first accommodating cavity, with one end abutting against the moving piston and the other end abutting against an inner wall of the first accommodating cavity, and the first elastic member is configured to drive the moving piston to move in a direction away from the first accommodating cavity when the moving member moves in a direction toward the first accommodating cavity; and
the second elastic member is sleeved on the moving piston, with one end abutting against the moving piston and the other end abutting against the moving member, and the second elastic member is configured to provide a thrust force for the moving piston to return to an original position thereof.

5. The drive control apparatus for a monopod according to claim 1, **characterized in that** a pressure relief through hole in communication with the first accommodating cavity is further formed inside the handle base; and
a pressure relief cavity in communication with the first accommodating cavity via the pressure relief through hole is formed inside the handle base;
alternatively, the drive control apparatus for a monopod further comprises a liquid storage bag that is in communication with the pressure relief through hole via a conduit.

6. The drive control apparatus for a monopod according to claim 5, **characterized in that** a pressure relief flow passage is formed between an outer surface of the moving member and an inner wall of the first accommodating cavity, and the pressure relief through hole is located at a tail end of the pressure relief flow passage;
an annular second sealing ring is disposed in the first accommodating cavity and located in the pressure relief flow passage;
at least a pressing portion is disposed on the outer surface of the moving member, and the pressing portion has a diameter gradually decreasing in the direction from the second accommodating cavity toward the first accommodating cavity; and
the pressure relief flow passage has a blocked state and a pressure relief state, wherein when the pressure relief flow passage is in the blocked state, the moving member moves in a direction toward the first accommodating cavity, and the pressing portion of the moving member presses the second sealing ring to block the pressure relief flow passage; and when the pressure relief flow passage is in the pressure relief state, the pressing portion does not press the second sealing ring, and the pressure relief flow passage remains open.

7. The drive control apparatus for a monopod according to claim 6, **characterized in that** an annular groove for mounting the second sealing ring is reserved in the inner wall of the first accommodating cavity and located in the pressure relief flow passage.

8. The drive control apparatus for a monopod according to claim 6, **characterized in that** a third sealing ring is disposed on the inner wall of the first accommodating cavity and located below the second sealing ring, and the pressure relief through hole is located between the third sealing ring and the second sealing ring.

9. The drive control apparatus for a monopod according to claim 1, **characterized by** further comprising:
a rotating shaft, mounted inside the handle base, wherein the rotating shaft penetrates through the handle body, such that the handle body rotates about the rotating shaft;
a knob, rotatably disposed at one end of the handle body;
an abutment block, located on one side of the handle body facing the handle base and connected to the knob; and
a lifting member, rotatably mounted on the rotating shaft, wherein one end of the lifting member acts on the bottom of the moving member, the other end of the lifting member is provided with an abutment surface and an accommodating opening disposed adjacently in an axial direction of the rotating shaft, and the abutment block is capable of abutting against a first position of the abutment surface or being accommodated in a second position of the accommodating opening as the knob rotates.

10. A monopod, **characterized by** comprising the drive control apparatus for a monopod according to any one of claims 1 to 9, and further comprising:
several sequentially sleeved tube members, wherein a locking structure is disposed between any two adjacent ones of the tube members, the drive control apparatus for a monopod is mounted at a top end of the outermost tube member, and the tube members are in communication with the second through hole; and
a driving mechanism, disposed inside the tube members and drivingly connected to each of the locking structures, wherein the driving mechanism is configured to drive each of the locking structures to set every two adjacent ones of the tube members in a relatively fixed state or a relatively slidable state.

11. The monopod according to claim 10, **characterized in that** the several sequentially sleeved tube members at least comprise a first tube member, a second tube member slidably disposed in the first tube member, and a third tube member slidably disposed in the second tube member; and
the locking structure comprises a first locking structure and a second locking structure, wherein the first locking structure is configured to set the first tube member and the second tube member in the relatively fixed state or the relatively slidable state, and the second locking structure is configured to set the second tube member and the third tube member in the relatively fixed state or the relatively slidable state.

12. The monopod according to claim 11, **characterized in that** the first tube member comprises a first sub-tube member and a second sub-tube member sleeved inside the first sub-tube member, and the second tube member comprises a third sub-tube member and a fourth sub-tube member sleeved inside the third sub-tube member; and
the driving mechanism comprises a first driving member, wherein the first driving member is disposed at one end of the first sub-tube member, an actuating end of the first driving member extends into the first sub-tube member and is connected to one end of the second sub-tube member, and the first driving member is configured to drive the second sub-tube member to move.

13. The monopod according to claim 12, **characterized in that** the first driving member comprises:
a mounting housing, having a first cavity, wherein a top wall of the mounting housing is provided with a first opening, and a bottom wall of the mounting housing is provided with a second opening;
a fixing base, mounted at the first opening of the mounting housing and at least partially extending into the first cavity; and
a piston sleeve, slidably disposed in the first cavity and sleeved on a portion of the fixing base extending into the first cavity, wherein a second cavity for accommodating a fluid medium is formed between the fixing base and the piston sleeve, a fifth through hole in communication with the second cavity is further reserved in the fixing base and is in communication with the second through hole, and
one end of the piston sleeve away from the fixing base passes through the second opening and is connected to one end of the second sub-tube member.

14. The monopod according to claim 13, **characterized in that** the driving mechanism further comprises a second driving member capable of being linked with the first driving member, wherein the second driving member is disposed at one end of the third sub-tube member, an actuating end of the second driving member extends into the third sub-tube member and is connected to one end of the fourth sub-tube member, the second driving member is configured to drive the fourth sub-tube member to move axially relative to the third sub-tube member, and the second driving member has the same structure as the first driving member.

15. The monopod according to claim 14, **characterized in that** the driving mechanism further comprises a fluid conduit;
a sixth through hole in communication with the second cavity is further reserved in the piston sleeve of the first driving member; and
a seventh through hole in communication with a second cavity of the second driving member is reserved in a fixing base of the second driving member, and both ends of the fluid conduit are connected to the sixth through hole and the seventh through hole respectively.
